# EUROPÄISCHE PATENTSCHRIFT

(11) **EP 1 421 884 B1**
(45) Veröffentlichungstag und Bekanntmachung des Hinweises auf die Patenterteilung: **06.06.2007**
(21) Anmeldenummer: 03023012.2
(22) Anmeldetag: 11.10.2003
(51) Int. Cl.: A47J 36/02

(54) **Induktionsplatte**
Induction plate
Plaque d'induction

(30) Priorität: 22.11.2002 DE 20218105 U
(43) Veröffentlichungstag der Anmeldung: 26.05.2004
(73) Patentinhaber: Heinrich Berndes Haushaltstechnik GmbH & Co. KG, 59757 Arnsberg (DE)
(72) Erfinder: Kloppsteck, Gerd, 59757 Arnsberg (DE)
(74) Vertreter: Basfeld, Rainer

(56) Entgegenhaltungen:
- FR-A- 2 693 093
- FR-A- 2 819 975

## Beschreibung

Die vorliegende Erfindung betrifft eine Vorrichtung zur Verwendung, auf einem Induktionskochfeld, umfassend ein mindestens teilweise aus ferromagnetischem Werkstoff bestehendes Induktionsplattenelement, auf das nicht induktionsgeeignetes Kochgeschirr aufsetzbar ist, und ein Griffelement, das an dem Induktionsplattenelement angebracht ist.

Seit ihrer Einführung Anfang der neunziger Jahre erfreuen sich Induktionsherde stetig wachsender Beliebtheit. Im Gegensatz zu herkömmlichen Elektroherden, bei denen mittels Wärmeleitung zunächst die Kochplatte und danach der Topf mit dem Kochgut erhitzt wird, oder zu Gasherden, bei denen mittels Wärmekonvektion und Wärmestrahlung der Topf mit dem Kochgut erhitzt wird, erzeugen bei einem Induktionsherd elektromagnetische Wellen die Wärme zur Erhitzung des Kochguts direkt im Topfboden. Diese Technik führt im Vergleich zu Elektro- oder Gasherden, bei denen stets ein Teil der Wärmeenergie an die Umgebung abgegeben wird, zu erheblich geringeren Energieverlusten. Darüber hinaus speichern die Kochplatten herkömmlicher Herde sehr viel Wärmeenergie, so dass der Herd nur sehr langsam auf Temperaturänderungen reagiert.

Bei einem Induktionsherd wird hingegen von einem Induktionskochfeld, in dem eine Spule angeordnet ist, ein hochfrequentes magnetisches Wechselfeld erzeugt, das im Boden eines speziellen, induktionsgeeigneten Kochgeschirrs Wirbelströme induziert, die ihrerseits Wärmeenergie freisetzen. Damit Kochgeschirr für die Verwendung auf einem Induktionskochfeld geeignet ist, muss es einen magnetisierbaren (ferromagnetischen) Boden aufweisen.

Herkömmliches für Elektro- oder Gasherde vorgesehenes Kochgeschirr, ist im allgemeinen nicht für Induktionsherde geeignet, da der Boden eines derartigen Kochgeschirrs normalerweise nicht aus ferromagnetischem Material besteht.

Der Kauf eines Induktionsherds ist daher häufig mit hohen Folgekosten verbunden, da induktionsgeeignetes Kochgeschirr erworben werden muss, damit der Herd betrieben werden kann.

Aus der FR 2 819 975 A1 ist eine Vorrichtung der eingangs genannten Art bekannt. Diese Vorrichtung umfasst ein aus einem ferromagnetischen Werkstoff bestehendes Induktionsplattenelement, auf das nicht induktionsgeeignetes Kochgeschirr aufsetzbar ist. Zur verbesserten Handhabung weist die Vorrichtung ein Griffelement auf, das lösbar am Induktionsplattenelement anbringbar ist. Ein Nachteil der aus dieser Druckschrift bekannten Vorrichtung besteht darin, dass während des Gebrauchs auf einem Induktionsherd beim Anheben des Kochgeschirrs vom lnduktionsplattenelement ein Weiterheizen erfolgt.

Aufgabe der vorliegenden Erfindung ist es, eine Vorrichtung zur Verwendung auf einem Induktionskochfeld zur Verfügung zu stellen, die es erlaubt, auch herkömmliches, nicht induktionsgeeignetes Kochgeschirr auf dem Induktionsherd zu verwenden, und die darüber hinaus im Vergleich zu der bekannten Lösung eine höhere Sicherheit bietet.

Diese Aufgabe wird durch eine Vorrichtung mit den Merkmalen des Anspruchs 1 gelöst. Die erfindungsgemäße Vorrichtung zur Verwendung auf einem Induktionskochfeld umfasst ein mindestens teilweise aus ferromagnetischem Werkstoff bestehendes Induktionsplattenelement, auf das nicht induktionsgeeignetes Kochgeschirr aufsetzbar ist, sowie ein Griffelement, das an dem Induktionsplattenelement angebracht ist. Das

Induktionsplattenelement ersetzt bei der erfindungsgemäßen Vorrichtung den ferromagnetischen Boden des induktionsgeeigneten Kochgeschirrs und erlaubt damit die Verwendung von nicht induktionsgeeignetem Kochgeschirr auf einem Induktionskochfeld. Die erfindungsgemäße Lösung zeichnet sich dadurch aus, dass die Masse und die Winkelstellung des Griffelements so gewählt sind, dass die Vorrichtung beim Anheben des Kochgeschirrs vom Induktionsplattenelement in Richtung des Griffelements wegkippt. Das vom Griffelement ausgeübte Drehmoment ist dann so groß, dass auch das Induktionsplattenelement vom Induktionskochfeld wegkippt, wodurch das elektromagnetische Wechselfeld unterbrochen wird. Auf diese Weise wird ein ungewünschtes Weiterheizen unterbunden und damit ein unsachgemäßer Gebrauch der erfindungsgemäßen Vorrichtung verhindert.

Eine vorteilhafte Ausführungsform sieht vor, dass das Induktionsplattenelement im Wesentlichen flach und plattenförmig ausgebildet ist. Diese Ausführungsform erlaubt insbesondere eine platzsparende Aufbewahrung der erfindungsgemäßen Vorrichtung.

In einer vorteilhaften Ausführungsform besteht das Griffelement mindestens abschnittsweise aus einem wärmeisolierenden Werkstoff. Dadurch wird die Verbrennungsgefahr bei der Verwendung der Vorrichtung erheblich vermindert.
In einer bevorzugten Ausführungsform ragt das Griffelement in einem stumpfen Winkel von dem Induktionsplattenelement weg. Diese Ausführungsform erlaubt eine bequeme und ergonomische Handhabung der erfindungsgemäßen Vorrichtung.

Um die Fertigung und gegebenenfalls auch Reparaturen zu erleichtern sieht eine weitere Ausführungsform vor, dass das Griffelement über ein gebogenes Drahtteil mit dem Induktionsplattenelement verbunden ist. Diese Ausführungsform erlaubt es, die Vorrichtung zur Verwendung auf einem Induktionskochfeld mehrteilig auszuführen, so dass bei einem Defekt eines Teils der Vorrichtung dieses Teil ausgetauscht werden kann, ohne dass die gesamte Vorrichtung unbrauchbar wird.

Zur platzsparenden Aufbewahrung sieht eine besonders vorteilhafte Ausführungsform vor, dass das Griffelement über ein gebogenes Drahtteil schwenkbar an dem Induktionsplattenelement angelenkt ist. Diese Ausführungsform erlaubt in einem Nichtgebrauchszustand der Vorrichtung deren platzsparende Aufbewahrung in einer Schublade oder in einem Schrank.

Vorzugsweise ist das Induktionsplattenelement an die Grundformen typischer Kochgefäße angepasst. Das heißt, dass der Umriss des Induktionsplattenelements im Wesentlichen kreisförmig, oval, rechteckig oder vieleckig ist.

Vorzugsweise besteht das Induktionsplattenelement aus Chromstahl und/oder einer Metalllegierung mit einem Niob- und/oder Molybdänanteil.

Um ein undefiniertes Verwerfen der Platte während ihres Betriebs auf einem Induktionskochfeld zu verhindern sieht eine besonders bevorzugte Ausführungsform vor, dass das Induktionsplattenelement sich abwechselnde vertieft beziehungsweise erhöht liegende Bereiche aufweist. Diese Bereiche sind in einer vorteilhaften Ausführungsform ringförmig und liegen konzentrisch ineinander.

Hinsichtlich der Stabilität des Induktionsplattenelements hat es sich als besonders vorteilhaft erwiesen, dass die vertieft beziehungsweise erhöht liegenden Bereiche des Induktionsplattenelements im wesentlichen noppenartig und/oder segmentartig ausgebildet sind und vorzugsweise strahlenförmig zueinander angeordnet sind.

In einer besonders bevorzugten Ausführungsform sind die ringförmigen vertieft beziehungsweise erhöht liegenden Bereiche aus dem Plattenmaterial des Induktionsplattenelements geprägt. Diese Ausführungsform erlaubt insbesondere eine einfache Herstellung des Induktionsplattenelements.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine perspektivische Ansicht einer Vorrichtung zur Verwendung auf einem Induktionskochfeld in ihrem Nichtgebrauchszustand;
- Fig. 2: eine perspektivische Ansicht der Vorrichtung zur Verwendung auf einem Induktionskochfeld aus Fig. 1 in ihrem Gebrauchszustand;
- Fig. 3: eine seitliche Querschnittsansicht der Vorrichtung zur Verwendung auf einem Induktionskochfeld aus Fig. 2;
- Fig. 4: eine Querschnittsansicht eines Induktionsplattenelements der Vorrichtung zur Verwendung auf einem Induktionskochfeld;
- Fig. 5: eine perspektivische Ansicht eines gebogenen Drahtteils;
- Fig. 6: eine Draufsicht auf das Induktionsplattenelement gemäß einer weiteren Ausführungsform der vorliegenden Erfindung.

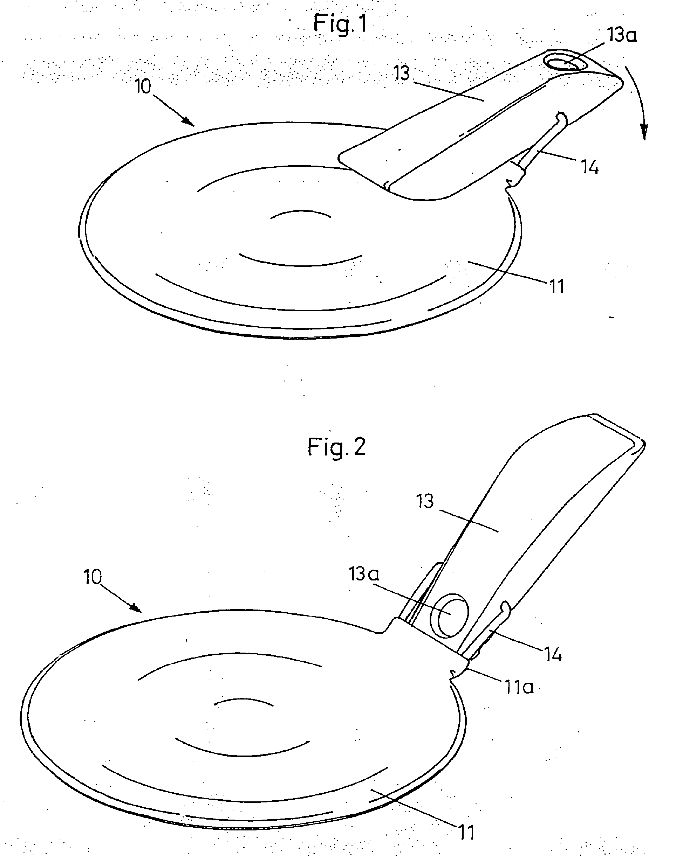

Zunächst wird auf Fig. 1 Bezug genommen. Darin ist eine Vorrichtung 10 zur Verwendung auf einem Induktionskochfeld in ihrem Nichtgebrauchszustand perspektivisch dargestellt. Die Vorrichtung 10 umfasst ein Induktionsplattenelement 11, das im Wesentlichen flach und plattenförmig ausgebildet ist, und in diesem Ausführungsbeispiel einen etwa kreisförmigen Umriss besitzt. Neben dem hier gezeigten etwa kreisförmigen Umriss des Induktionsplattenelements 11 sind auch andere symmetrische oder asymmetrische, beispielsweise ovale, rechteckige oder vieleckige Umrisse denkbar. Die Gestaltung des Umrisses des Induktionsplattenelements 11 hängt insbesondere von der Form des Kochgeschirrs ab, für das die Vorrichtung 10 vorgesehen ist.

Das Induktionsplattenelement 11 besteht mindestens teilweise aus ferromagnetischem Werkstoff, vorzugsweise aus einer Chrom-Stahl-Verbindung. Einsetzbar sind aber grundsätzlich auch andere ferromagnetische Werkstoffe, insbesondere solche mit Niobstabilisatoren und/oder Molybdänzusätzen.

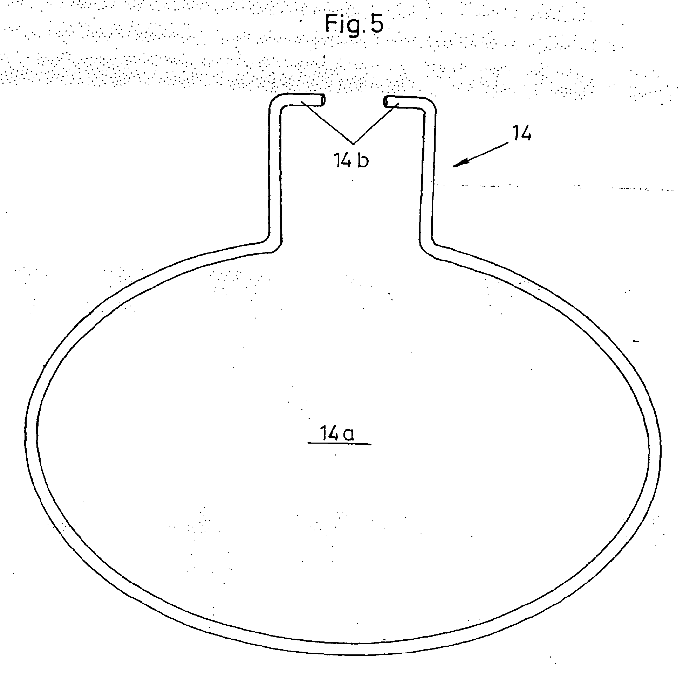

Um die Handhabung zu erleichtern weist die Vorrichtung 10 ein Griffelement 13 auf, das mittels eines gebogenen Drahtteils 14, das in Fig. 5 im Detail gezeigt ist, schwenkbar am Induktionsplattenelement 11 angelenkt ist. Das Griffelement 13 besteht aus einem wärmeisolierenden Material, um den Benutzer der Vorrichtung 10 vor Verletzungen durch eine übermäßige Wärmeeinwirkung während des Gebrauchs zu bewahren. Die Schwenkbarkeit des Griffelements 13 hat den Vorteil, dass die Vorrichtung 10 während ihres Nichtgebrauchs in eine relativ flache Form, wie sie in Figur 1 gezeigt ist, gebracht werden kann und somit bequem und ohne übermäßigen Platzaufwand in Schränken, Schubladen oder dergleichen gelagert werden kann.

Darüber hinaus ist im Griffelement 13 eine Öffnung 13a vorgesehen, die während des Nichtgebrauchs der Vorrichtung 10 gem. Fig. 1 auf der dem Randbereich des Induktionsplattenelements 11 abgewandten Seite des Griffelements 13 angeordnet ist. Die Öffnung 13a dient dem Zweck, die Vorrichtung 10 während ihres Nichtgebrauchs mit Hilfe geeigneter Befestigungsmittel (z.B. mit einem Haken) an einer Wand oder dergleichen anzubringen und dort platzsparend aufzubewahren.

Um die Vorrichtung 10 verwenden zu können, braucht der Benutzer lediglich das Griffelement 13 aus der in Fig. 1 gezeigten Position in die durch einen Pfeil angedeutete Richtung zu verschwenken, bis die in Fig. 2 dargestellte Gebrauchsposition erreicht ist. Das Induktionsplattenelement 11 weist an seinem griffseitigen Randabschnitt einen Vorsprung 11a auf, der in einem stumpfen Winkel relativ zur Ebene des Induktionsplattenelements 11 orientiert ist und als Widerlager für das Griffelement 13 dient und so die Anordnung des Griffelements 13 und des Induktionsplattenelements 11 im Gebrauchszustand der Vorrichtung 10 stabilisiert.

Mit Hilfe des Griffelements 13 kann der Verwender die Vorrichtung 10 bequem auf ein Induktionskochfeld eines Induktionsherdes stellen und darauf ein (nicht explizit dargestelltes) nicht induktionsgeeignetes Kochgeschirr, das beispielsweise aus versiegeltem Aluminiumguss hergestellt sein kann, aufsetzen.

Das mindestens teilweise aus ferromagnetischem Werkstoff bestehende Induktionsplattenelement 11, auf das das nicht induktionsgeeignete Kochgeschirr aufsetzbar ist, ersetzt den bei speziellem, induktionsgeeignetem Kochgeschirr vorhandenen ferromagnetischen Boden. Im Induktionsplattenelement 11 induziert das vom Induktionskochfeld erzeugte hochfrequente magnetische Wechselfeld Wirbelströme. Diese Wirbelströme setzen im Induktionsplattenelement 11 Wärmeenergie frei, die durch Wärmeleitung das nicht induktionsgeeignete Kochgeschirr mit dem Kochgut erwärmt. Der Einsatz der erfindungsgemäßen Vorrichtung 10 erlaubt somit die Verwendung von prinzipiell nicht induktionsgeeignetem Kochgeschirr auf einem Induktionskochfeld.

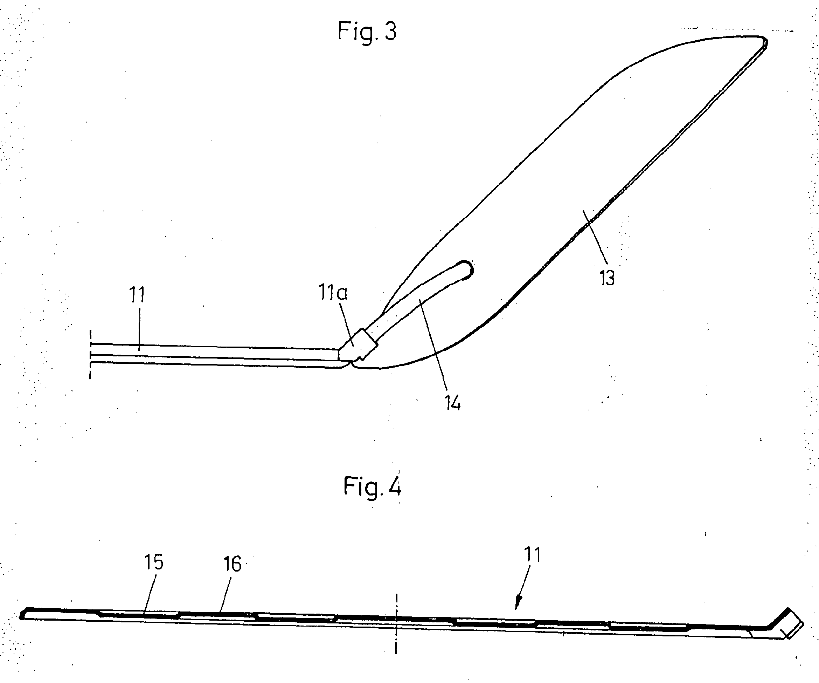

In Fig. 3 ist eine seitliche Querschnittsansicht der Induktionsplatte 10 in ihrem Verwendungszustand gem. Fig. 2 gezeigt. Es wird deutlich, dass das Griffelement 13 in einem stumpfen Winkel von dem Induktionsplattenelement 11 wegragt und so eine ergonomische und für den Verwender bequeme Handhabung der Vorrichtung 10 ermöglicht. Abhängig von der Größe und vom Gewicht der Vorrichtung 10 können auch andere Winkelstellungen zwischen Griffelement 13 und Induktionsplattenelement 11 sinnvoll sein. Auch der Einsatz eines weiteren Griffelements, das beispielsweise dem Griffelement 13 gegenüberliegend angeordnet sein kann, ist denkbar.

Erfindungsgemäß sind die Masse und die Winkelstellung des Griffelements 13 so gewählt, dass beim Anheben des Kochgeschirrs von der Vorrichtung 10 diese (und damit auch das Induktionsplattenelement 11) in Richtung des Griffs wegkippt. Dadurch wird erreicht, dass das elektromagnetische Wechselfeld des Induktionskochfelds unterbrochen wird und dadurch ein ungewünschtes Weiterheizen unterbunden wird.

Fig. 4 zeigt eine Querschnittsansicht des Induktionsplattenelements 11. Das Induktionsplattenelement 11 weist bei einem kreisförmigen Umriss im Wesentlichen ringförmige, von außen nach innen zum Zentrum hin betrachtet sich abwechselnde vertieft beziehungsweise erhöht liegende Bereiche 15, 16 auf. Diese liegen konzentrisch ineinander und sind aus dem Plattenmaterial des Induktionsplattenelements 11 geprägt. Diese konzentrisch angeordneten konkaven beziehungsweise konvexen Prägungen des Induktionsplattenelements 11 verhindern ein undefiniertes Verwerfen des Induktionsplattenelements 11 während des Betriebs der Vorrichtung 10 auf dem Induktionskochfeld und erlauben damit eine sichere Handhabung.

Fig. 5 zeigt eine perspektivische Ansicht des gebogenen Drahtteils 14. Das gebogene Drahtteil 14 ist in seiner Grundform an den Umriss des Induktionsplattenelements 11 angepasst. Das gebogene Drahtteil 14 ist in diesem Ausführungsbeispiel teilkreisförmig aufgebaut und im Bereich des (in dieser Abbildung nicht gezeigten) Vorsprungs 11a des Induktionsplattenelements 11 in einem stumpfen Winkel relativ zu einer Ebene 14a abgewinkelt, die durch den teilkreisförmigen Abschnitt des gebogenen Drahtteils 14 festgelegt ist. Die beiden abgewinkelten Abschnitte sind im Bereich ihrer jeweiligen Endbereiche 14b ihrerseits in einem annähernd rechten Winkel in der Weise umgebogen, dass daran die schwenkbare Befestigung des Griffelements 13 an den Endbereichen 14b des gebogenen Drahtteils 14 möglich ist.

Die Anbringung des gebogenen Drahtteils 14 erfolgt unterseitig am Induktionsplattenelement 11, so dass sich der relativ zur Ebene des gebogenen Drahtteils 14 abgewinkelte Abschnitt unterhalb des Vorsprungs 11a und über diesen hinaus erstreckt, damit das Griffelement 13 einfach montiert werden kann.

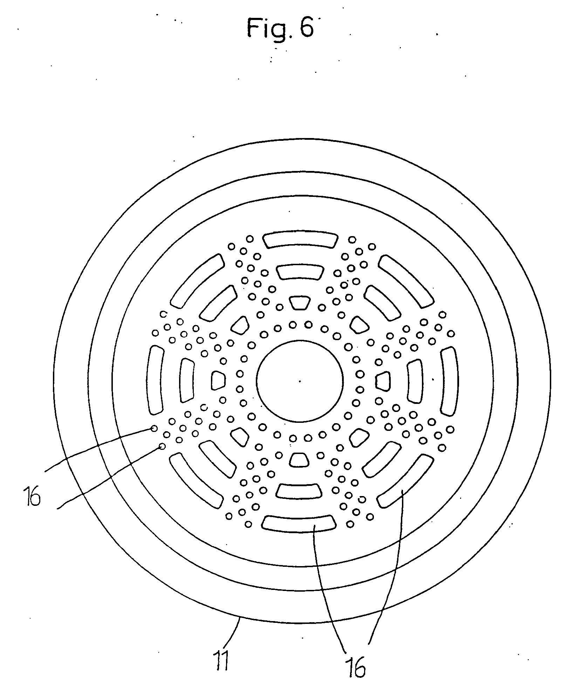

Fig. 6 zeigt abschließend eine Draufsicht auf eine weitere Ausführungsform des Induktionsplattenelements 11, die sich hinsichtlich ihrer Stabilität in der Praxis als vorteilhaft erwiesen hat. In diesem Ausführungsbeispiel sind die erhöht liegenden Bereiche 16 konzentrisch um den Mittelpunkt des Induktionsplattenelements 11 angeordnet und dabei abwechselnd sowohl noppenartig als auch segmentartig ausgebildet. Darüber hinaus sind die noppenartig und segmentartig ausgebildeten, erhöht liegenden Bereiche 16 in radialer Richtung von innen nach außen betrachtet gruppiert und somit gewissermaßen strahlenförmig zueinander angeordnet. Dabei sind in diesem Ausführungsbeispiel die noppenartigen Bereiche im wesentlichen kreisförmig und die segmentartigen Bereiche wegen der Symmetrie des Induktionsplattenelements 11 im wesentlichen teilringförmig ausgeführt. Man erkennt, dass die Länge der segmentartig ausgebildeten Bereiche in Umfangsrichtung des Induktionsplattenelements 11 von innen nach außen betrachtet zunimmt. Somit nimmt bei konstanter Breite der segmentartigen Bereiche auch deren Fläche von innen nach außen zu.

## Patentansprüche

1. Vorrichtung zur Verwendung auf einem Induktionskochfeld, umfassend ein mindestens teilweise aus ferromagnetischem Werkstoff bestehendes Induktionsplattenelement (11), auf das nicht induktionsgeeignetes Kochgeschirr aufsetzbar ist, und ein Griffelement (13), das an dem Induktionsplattenelement (11) angebracht ist, **dadurch gekennzeichnet, dass** die Masse und die Winkelstellung des Griffelements (13) so gewählt sind, dass die Vorrichtung (10) beim Anheben des Kochgeschirrs vom Induktionsplattenelement (11) in Richtung des Griffelements (13) wegkippt.

2. Vorrichtung nach Anspruch 1, **dadurch gekennzeichnet, dass** das Induktionsplattenelement (11) im Wesentlichen flach und plattenförmig ausgebildet ist.

3. Vorrichtung nach einem der Ansprüche 1 oder 2, **dadurch gekennzeichnet, dass** das Griffelement (13) mindestens abschnittsweise aus einem wärmeisolierenden Werkstoff besteht.

4. Vorrichtung nach einem der Ansprüche 1 bis 3, **dadurch gekennzeichnet, dass** das Griffelement (13) in einem stumpfen Winkel von dem Induktionsplattenelement (11) wegragt.

5. Vorrichtung nach einem der Ansprüche 1 bis 4, **dadurch gekennzeichnet, dass** das Griffelement (13) über ein gebogenes Drahtteil (14) mit dem Induktionsplattenelement (11) verbunden ist.

6. Vorrichtung nach einem der Ansprüche 1 bis 5, **dadurch gekennzeichnet, dass** das Griffelement (13) über ein gebogenes Drahtteil (14) schwenkbar an dem Induktionsplattenelement (11) angelenkt ist.

7. Vorrichtung nach einem der Ansprüche 1 bis 6, **dadurch gekennzeichnet, dass** das Induktionsplattenelement (11) einen im Wesentlichen kreisförmigen, ovalen, rechteckigen oder vieleckigen Umriss aufweist.

8. Vorrichtung nach einem der Ansprüche 1 bis 7, **dadurch gekennzeichnet, dass** das Induktionsplattenelement (11) aus Chromstahl und/oder einer Metalllegierung mit einem Niob- und/oder Molybdänanteil besteht.

9. Vorrichtung nach einem der Ansprüche 1 bis 8, **dadurch gekennzeichnet, dass** das Induktionsplattenelement (11) sich abwechselnde vertieft beziehungsweise erhöht liegende Bereiche (15, 16) aufweist.

10. Vorrichtung nach Anspruch 9, **dadurch gekennzeichnet, dass** die sich abwechselnden vertieften beziehungsweise erhöhten Bereiche (15, 16) ringförmig sind und konzentrisch ineinander liegen.

11. Vorrichtung nach Anspruch 9, **dadurch gekennzeichnet, dass** die vertieft beziehungsweise erhöht liegenden Bereiche (15, 16) des Induktionsplattenelements (11) im Wesentlichen noppenartig und/oder segmentartig ausgebildet sind und vorzugsweise strahlenförmig zueinander angeordnet sind.

12. Vorrichtung nach einem der Ansprüche 9 bis 11, **dadurch gekennzeichnet, dass** die vertieft beziehungsweise erhöht liegenden Bereiche (15, 16) aus dem Plattenmaterial des Induktionsplattenelements (11) geprägt sind.

## Claims

1. Apparatus for use on an induction hob, comprising an induction plate element (11) which is at least partially composed of ferromagnetic material and on which cookware which is not suitable for induction cooking can be placed, and a handle element (13) which is attached to the induction plate element (11), **characterized in that** the mass and the angular position of the handle element (13) are selected such that the apparatus (10) tilts away in the direction of the handle element (13) when the item of cookware is lifted off the induction plate element (11).

2. Apparatus according to Claim 1, **characterized in that** the induction plate element (11) is of substantially flat and plate-like design.

3. Apparatus according to either of Claims 1 and 2, **characterized in that** at least sections of the handle element (13) are composed of a thermally insulating material.

4. Apparatus according to one of Claims 1 to 3, **characterized in that** the handle element (13) projects away from the induction plate element (11) at an obtuse angle.

5. Apparatus according to one of Claims 1 to 4, **characterized in that** the handle element (13) is connected to the induction plate element (11) by means of a bent wire part (14).

6. Apparatus according to one of Claims 1 to 5, **characterized in that** the handle element (13) is hinge-connected in a pivotable manner to the induction plate element (11) by means of a bent wire part (14).

7. Apparatus according to one of Claims 1 to 6, **characterized in that** the induction plate element (11) has a substantially circular, oval, rectangular or polygonal outline.

8. Apparatus according to one of Claims 1 to 7, **characterized in that** the induction plate element (11) is composed of chrome steel and/or a metal alloy containing niobium and/or molybdenum.

9. Apparatus according to one of Claims 1 to 8, **characterized in that** the induction plate element (11) has regions (15, 16) which are alternately recessed and elevated.

10. Apparatus according to Claim 9, **characterized in that** the alternating recessed and elevated regions (15, 16) are annular and are situated concentrically one in the other.

11. Apparatus according to Claim 9, **characterized in that** the recessed and elevated regions (15, 16) of the induction plate element (11) are of substantially stud-like and/or segment-like design and are preferably arranged in a radiant manner in relation to one another.

12. Apparatus according to one of Claims 9 to 11, **characterized in that** the recessed and elevated regions (15, 16) are stamped in the plate material of the induction plate element (11).

## Revendications

1. Dispositif destiné à être utilisé sur un plan de cuisson par induction, comprenant un élément de plaque d'induction (11) constitué au moins en partie de matériau ferromagnétique, sur lequel peut être posé un appareil de cuisson non approprié pour l'induction, et un élément de préhension (13) qui est monté sur l'élément de plaque d'induction (11), **caractérisé en ce que** les dimensions et la position angulaire de l'élément de préhension (13) sont choisies de telle sorte que le dispositif (10) bascule dans la direction de l'élément de préhension (13) lorsque l'on soulève l'appareil de cuisson de l'élément de plaque d'induction (11).

2. Dispositif selon la revendication 1, **caractérisé en ce que** l'élément de plaque d'induction (11) est essentiellement plat et en forme de plaque.

3. Dispositif selon l'une quelconque des revendications 1 ou 2, **caractérisé en ce que** l'élément de préhension (13) se compose au moins en partie d'un matériau calorifuge.

4. Dispositif selon l'une quelconque des revendications 1 à 3, **caractérisé en ce que** l'élément de préhension (13) fait saillie suivant un angle obtus depuis l'élément de plaque d'induction (11).

5. Dispositif selon l'une quelconque des revendications 1 à 4, **caractérisé en ce que** l'élément de préhension (13) est connecté par le biais d'une partie de fil métallique cintrée (14) à l'élément de plaque d'induction (11).

6. Dispositif selon l'une quelconque des revendications 1 à 5, **caractérisé en ce que** l'élément de préhension (13) est articulé de manière à pouvoir pivoter sur l'élément de plaque d'induction (11) par le biais d'une partie de fil métallique cintrée (14).

7. Dispositif selon l'une quelconque des revendications 1 à 6, **caractérisé en ce que** l'élément de plaque d'induction (11) présente un pourtour essentiellement circulaire, ovale, rectangulaire ou polygonal.

8. Dispositif selon l'une quelconque des revendications 1 à 7, **caractérisé en ce que** l'élément de plaque d'induction (11) se compose d'acier chromé et/ou d'un alliage de métaux avec une proportion de niobium et/ou de molybdène.

9. Dispositif selon l'une quelconque des revendications 1 à 8, **caractérisé en ce que** l'élément de plaque d'induction (11) présente une alternance de régions (15, 16) renfoncées et rehaussées.

10. Dispositif selon la revendication 9, **caractérisé en ce que** les régions (15, 16), en alternance renfoncées et rehaussées, sont de forme annulaire et disposées de manière concentrique l'une dans l'autre.

11. Dispositif selon la revendication 9, **caractérisé en ce que** les régions (15, 16) renfoncées ou rehaussées de l'élément de plaque d'induction (11) sont réalisées essentiellement sous forme de boutons et/ou de segments et sont disposées les unes par rapport aux autres de préférence sous forme de rayons.

12. Dispositif selon l'une quelconque des revendications 9 à 11, **caractérisé en ce que** les régions (15, 16) renfoncées ou rehaussées sont gaufrées dans le matériau de plaque de l'élément de plaque d'induction (11).
